# EUROPEAN PATENT SPECIFICATION

(11) **EP 3 828 083 B1**
(45) Date of publication and mention of the grant of the patent: **22.05.2024**
(21) Application number: 20210076.4
(22) Date of filing: 26.11.2020
(51) Int. Cl.: B64C 39/02, B64C 29/00, G05D 1/00

(54) **UNMANNED AERIAL VEHICLE AND CONTROL METHOD THEREOF**
UNBEMANNTES LUFTFAHRZEUG UND STEUERUNGSVERFAHREN DAFÜR
VÉHICULE AÉRIEN SANS PILOTE ET SON PROCÉDÉ DE COMMANDE

(30) Priority: 26.11.2019 CN 201911175076
(43) Date of publication of application: 02.06.2021
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- US-A1- 2018 002 012
- US-A1- 2018 065 737
- US-A1- 2019 329 883
- US-B1- 10 081 436
- US-B1- 10 450 062
- Anonymous: "Pitot-static system - Wikipedia", , 12 November 2019 (2019-11-12), XP055787865, Retrieved from the Internet: URL:https://web.archive.org/web/2019111207 2057/https://en.wikipedia.org/wiki/Pitot-s tatic_system [retrieved on 2021-03-19]

## Description

### TECHNICAL FIELD

The present invention relates to the technical field of automatic control, in particular to an unmanned aerial vehicle and a control method thereof.

### BACKGROUND

US 2019/ 329 883 A1 relates to an aerial vehicle, which includes an airframe, vertical propulsion units, and a controller. US 10 450 062 B1 relates to an aerial vehicle having a single wing, which is configured for vertical-flight and forward-flight operations. US 2018/ 065 737 A1 relates to a personal aircraft having multiple vertical lift rotors, tandem wings, and forward thrust propellers. US 10 081 436 B1 relates to a long-distance drone having a canard body style with a main body, a left main wing, a right main wing, a left forewing, and a right forewing. With the rapid development of technologies, the unmanned aerial vehicle industry are also rapidly developed, and demands for unmanned aerial vehicles and the application fields of the unmanned aerial vehicles have also been continuously developed. However, existing unmanned aerial vehicles have the problem of relatively low flight performance. For example, if a lift motor fails during the cruise of an unmanned aerial vehicle, it is easy to cause unstable flight of the unmanned aerial vehicle or even crash and damage of the entire aerial vehicle; in case of insufficient power drive, or if a power drive mechanism fails, it is easy to cause the whole unmanned aerial vehicle to lose power and cause accidents. Therefore, the stability, the safety and the like of the existing unmanned aerial vehicle cannot be effectively ensured.

### SUMMARY

The technical problem to be solved by the present invention is to overcome the defects, in the existing technology, that an unmanned aerial vehicle is relatively low in flight performance, and the stability and the safety cannot be effectively ensured. An unmanned aerial vehicle and a control method thereof are provided.

The present invention solves the above technical problems through the following technical solutions:

The present invention provides an unmanned aerial vehicle. The unmanned aerial vehicle includes a control module, motor arms, a fuselage main body, a plurality of lift motors and lift propellers.

The control module is provided in the fuselage main body of the unmanned aerial vehicle.

The motor arms are fixedly provided on two sides of the fuselage main body in parallel to one another and to the fuselage main body.

The lift motors are electrically connected with the control module.

Two ends of the motor arms are respectively provided with at least two of the lift motors.

The lift motors are provided in the motor arms, and the lift propellers are fixedly provided on the motor arms.

One lift motor is fixedly connected with at least one lift propeller.

The control module is used to preset a correspondence between two ends of each motor arm and the corresponding lift motors.

The control module is used to control each lift motor to be initiated to drive the corresponding lift propeller to rotate to work.

the control module is also used to determine whether a lift motor fails, if so, acquire a position on the motor arm corresponding to the failing lift motor, and adjust the power of other lift motors in all the other lift motors corresponding to a position different from the failing lift motor.

Preferably, the unmanned aerial vehicle further includes at least two first steering engines and second steering engines.

The first steering engines are fixedly provided in a left wing of the unmanned aerial vehicle, and the second steering engines are fixedly provided in a right wing of the unmanned aerial vehicle.

Each first steering engine is fixedly connected with one first control surface on the left wing, and each second steering engine is fixedly connected with one second control surface on the right wing.

The control module is electrically connected with the first steering engines and the second steering engines respectively.

The control module is used to control the first steering engines and the second steering engines to adjust the deflecting directions of the first control surfaces and the second control surfaces.

Preferably, when the left wing includes two first steering engines, the first steering surfaces.

Preferably, when the left wing includes two first steering engines, the first steering engines include a first sub steering engine and a second sub steering engine, and the second sub steering engine is located on the outer side of the first sub steering engine.

When the left wing includes two second steering engines, the second steering engines include a third sub steering engine and a fourth sub steering engine, and the fourth sub steering engines include a first sub steering engine and a second sub steering engine, and the second sub steering engine is located on the outer side of the first sub steering engine.

When the left wing includes two second steering engines, the second steering engines include a third sub steering engine and a fourth sub steering engine, and the fourth sub steering engine is located on the outer side of the third sub steering engine.

The control module is used to control the deflecting directions of both the first control surface corresponding to the first sub steering engine and the second control surface corresponding to the third sub steering engine to be upward, and control the deflecting directions of both the first control surface corresponding to the second sub steering engine and the second control surface corresponding to the fourth sub steering engine to be downward.

Preferably, when the two first steering engines are provided in the left wing, and the two second steering engines are provided in the right wing, the control module is used to control the deflecting directions corresponding to the two first control surfaces of the left wing to be opposite, and control the deflecting directions corresponding to the two second control surfaces of the right wing to be opposite; or, the control module is used to control the deflecting directions of the two first steering engines and the two second steering engines to be consistent.

Preferably, the unmanned aerial vehicle further includes a first drive motor, a second drive motor, a first drive propeller and a second drive propeller.

Both the first drive motor and the second drive motor are provided in the fuselage main body, and are fixedly provided at the front end and the rear end of the fuselage main body respectively.

The first drive propeller is electrically connected with the first drive motor, and the first drive propeller is fixedly provided at the front end of the fuselage main body.

The second drive propeller is electrically connected with the second drive motor, and the second drive propeller is fixedly provided at the rear end of the fuselage main body.

The first drive motor and the second drive motor are electrically connected with the control module respectively.

The control module is used to control the first drive motor to be initiated to drive the first drive propeller to start to rotate, so as to drive the unmanned aerial vehicle to fly forward; and/or,
the control module is used to control the second drive motor to be initiated to drive the second drive propeller to start to rotate, so as to push the unmanned aerial vehicle to fly forward.

Preferably, the control module is used to control, when the first drive motor fails, the second drive motor to be initiated to drive the second drive propeller to start to rotate, so as to push the unmanned aerial vehicle to fly forward; or,
the control module is used to control, when the second drive motor fails, the first drive motor to be initiated to drive the first drive propeller to start to rotate, so as to drive the unmanned aerial vehicle to fly forward.

Moreover, the unmanned aerial vehicle further includes a third steering engine and two vertical tails.

The two vertical tails are provided on two sides of a vertical direction of the tail end of the fuselage main body respectively.

At least one third steering engine is provided in each vertical tail.

Each third steering engine is fixedly connected with one third control surface on the vertical tail.

The third steering engines are electrically connected with the control module.

The control module is used to control the third steering engines to adjust the deflecting directions of the third control surfaces.

Preferably, when one third steering engine is provided on each vertical tail, the control module is used to control, when one third steering engine fails, the other third steering engine to adjust the deflecting direction of the corresponding third control surface.

Preferably, the unmanned aerial vehicle further includes at least two airspeed tubes.

The airspeed tubes are respectively provided on the fuselage main body and/or the motor arms.

The orientations of the airspeed tubes are consistent with the flight direction of the unmanned aerial vehicle.

Preferably, when two ends of the motor arms are respectively provided with two lift motors, each lift motor is fixedly connected with one lift propeller.

When the unmanned aerial vehicle includes two airspeed tubes, each airspeed tube is fixedly provided at the front end position of one motor arm.

The present invention further provides a control method for an unmanned aerial vehicle. The control method is applied in the above unmanned aerial vehicle, and includes:
presetting, by the control module, a correspondence between two ends of each motor arm and the corresponding lift motors;
controlling, by the control module, each lift motor to be initiated to drive the corresponding lift propeller to rotate to work;
determining, by the control module, whether a lift motor fails, if so, acquiring a position on the motor arm corresponding to the failing lift motor, and adjusting the power of other lift motors in all the other lift motors corresponding to a position different from the failing lift motor.

Preferably, when the aerial vehicle further includes at least two first steering engines and second steering engines, the first steering engines are fixedly provided in a left wing of the aerial vehicle, the second steering engines are fixedly provided in a right wing of the aerial vehicle, each first steering engine is fixedly connected with one first control surface on the left wing, and each second steering engine is fixedly connected with one second control surface on the right wing, the control method further includes:
controlling, by the control module, the first steering engines and the second steering engines to adjust the deflecting directions of the first control surfaces and the second control surfaces.

Preferably, when the left wing includes two first steering engines, the first steering engines include a first sub steering engine and a second sub steering engine, and the second sub steering engine is located on the outer side of the first sub steering engine; when the left wing includes two second steering engines, the second steering engines include a third sub steering engine and a fourth sub steering engine, and the fourth sub steering engine is located on the outer side of the third sub steering engine; the control method further includes:
controlling, by the control module, the deflecting directions of both the first control surface corresponding to the first sub steering engine and the second control surface corresponding to the third sub steering engine to be upward, and controlling, by the control module, the deflecting directions of both the first control surface corresponding to the second sub steering engine and the second control surface corresponding to the fourth sub steering engine to be downward.

Preferably, when the two first steering engines are provided in the left wing, and the two second steering engines are provided in the right wing, the control method further includes:
controlling, by the control module, the corresponding deflecting directions of the two first control surfaces of the left wing to be opposite, and controlling, by the control module, the corresponding deflecting directions of the two second control surfaces of the right wing to be opposite; or, control, by the control module, the deflecting directions of the two first steering engines and the two second steering engines to be consistent.

Preferably, when the aerial vehicle further includes a first drive motor, a second drive motor, a first drive propeller and a second drive propeller, the control method further includes:
controlling, by the control module, the first drive motor to be initiated to drive the first drive propeller to start to rotate, so as to drive the aerial vehicle to fly forward; and/or,
controlling, by the control module, the second drive motor to be initiated to drive the second drive propeller to start to rotate, so as to push the aerial vehicle to fly forward.

Preferably, the control method further includes:
when the first drive motor fails, controlling, by the control module, the second drive motor to be initiated to drive the second drive propeller to start to rotate, so as to push the aerial vehicle to fly forward; or,
when the second drive motor fails, controlling, by the control module, the first drive motor to be initiated to drive the first drive propeller to start to rotate, so as to drive the aerial vehicle to fly forward.

Moreover, the control method further includes:
controlling, by the control module, the third steering engines to adjust the deflecting directions of the third control surfaces.

Preferably, when one third steering engine is provided on each vertical tail, the control method further includes:
when one third steering engine fails, controlling, by the control module, the other third steering engine to adjust the deflecting direction of the corresponding third control surface.

The present invention has positive progressive results:
1) the lift motors and the lift propellers are respectively added at four positions on the motor arms, and are simultaneously initiated, so that the stability of the aerial vehicle is improved; when one lift motor at a certain position fails, the power of other lift motors corresponding to this position is adjusted to improve the safety of the aerial vehicle;
2) the steering engines are added at the left and right wings, so as to improve the accuracy of flight angle control for the aerial vehicle; the steering engines close to the fuselage main body can be controlled to adjust the deflecting directions of the control surfaces, thereby increasing the lift force of the aerial vehicle; by setting the deflecting directions of the control surfaces of the same pair of wings to be opposite, the objective of using the wings as spoilers is achieved; in addition, when one control surface loses the effect, other control surfaces still keep working, thus ensuring the safety of the aerial vehicle;
3) by providing the front pulling and back pushing drive motors to guarantee sufficient power during the cruise of the aerial vehicle, the stability of the aerial vehicle is ensured, and the cooperative use of the two drive motors also improves the safety of the aerial vehicle at the same time;
4) the vertical tails of longitudinally symmetrical structures are provided, and the steering engines are provided on both the vertical tails, so that the control surface efficiency and the servo torque conduction are ensured, and the safety of the aerial vehicle is improved at the same time;
5) the airspeed tubes are added on both the left and right sides of the front end of the aerial vehicle, so that the accuracy of existing airspeed data is improved, and the air safety control for the aerial vehicle is further ensured.

### BRIEF DESCRIPTION OF THE DRAWINGS

FIG. 1 is a schematic structural diagram of an unmanned aerial vehicle of Embodiment 1 of the present invention.
FIG. 2 is a schematic structural diagram of a first visual angle of an unmanned aerial vehicle of Embodiment 1 of the present invention.
FIG. 3 is a schematic structural diagram of a second visual angle of an unmanned aerial vehicle of Embodiment 1 of the present invention.
FIG. 4 is a schematic structural diagram of an unmanned aerial vehicle of Embodiment 2 of the present invention.
FIG. 5 is a schematic structural diagram of a first visual angle of an unmanned aerial vehicle of Embodiment 2 of the present invention.
FIG. 6 is a schematic structural diagram of a second visual angle of an unmanned aerial vehicle of Embodiment 2 of the present invention.
FIG. 7 is a schematic structural diagram of a third visual angle of an unmanned aerial vehicle of Embodiment 2 of the present invention.
FIG. 8 is a flowchart of a control method for an unmanned aerial vehicle of Embodiment 3 of the present invention.

### DESCRIPTION OF THE EMBODIMENTS

The present invention will be further described below in a manner of embodiments, but the present invention is not limited to the scope of the embodiments accordingly.

### Embodiment 1

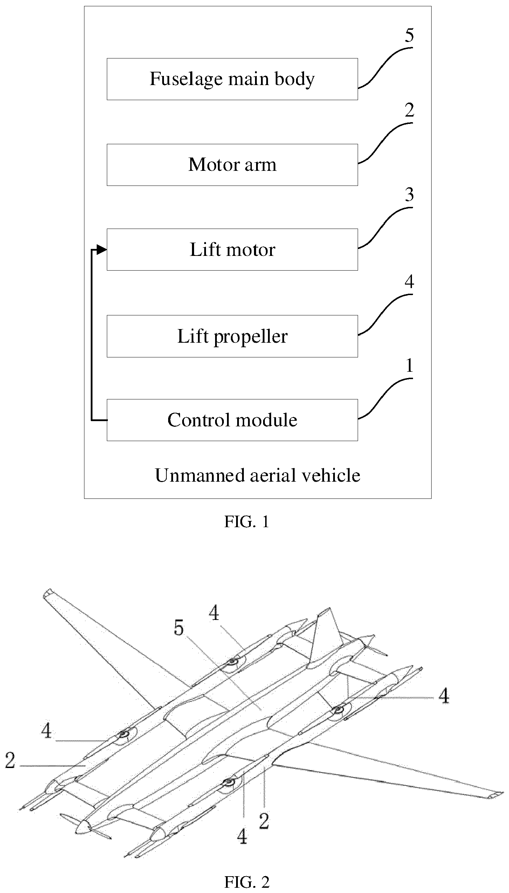

As shown in FIG. 1, an unmanned aerial vehicle of the present embodiment includes a control module 1, motor arms 2, a plurality of lift motors 3 and lift propellers 4.

The control module 1 is provided in a fuselage main body 5 of the unmanned aerial vehicle. The motor arms 2 are fixedly provided on two sides of the fuselage main body 5 in parallel respectively. The lift motors 3 are electrically connected with the control module 1.

Two ends of the motor arms 2 are respectively provided with at least two lift motors 3. The lift motors 3 are provided in the motor arms 2. One lift motor 3 is fixedly connected with at least one lift propeller 4.

The control module 1 is used to preset a correspondence between two ends of each motor arm 2 and the corresponding lift motors 3. Preferably, the number of lift motors corresponding to each end of each motor arm is equal.

The control module 1 is used to control each lift motor 3 to be initiated to drive the corresponding lift propeller 4 to rotate to work.

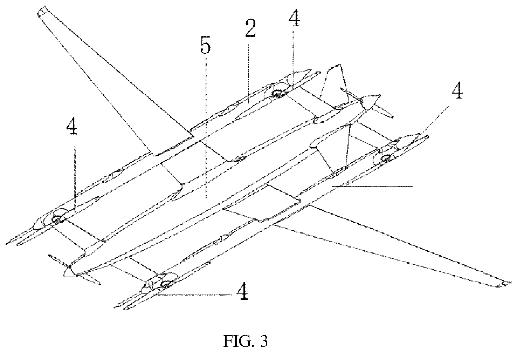

Specifically, as shown in FIG. 2 and FIG. 3, when two ends of the motor arms 2 are respectively provided with two lift motors 3, each lift motor 3 is fixedly connected with one lift propeller 4; and at this time, the aerial vehicle includes two motor arms; one end of each motor arm is correspondingly provided with two lift motors and corresponding lift propellers, totally including 8 lift motors and 8 lift propellers. In the cruise process of the aerial vehicle, the 8 lift motors are controlled to be simultaneously initiated to work, thereby guaranteeing the stability of the aerial vehicle.

The control module 1 is also used to determine whether a lift motor 3 fails, determine that the failing lift motor 3 is a target lift motor 3 if so, acquire, according to the correspondence, a target position on the motor arm 2 corresponding to the target lift motor 3, and adjust the power of other lift motors 3 in all the lift motors 3 corresponding to the target position apart from the target lift motor 3.

Specifically, the power of each of the residual lift motors corresponding to the target position can be controlled to increase the same power, or only the power of partial lift motors is increased, thereby effectively avoiding such a phenomenon of crash and damage of the whole aerial vehicle caused by the fact that one lift motor loses the lift effect.

In the present embodiment, the lift motors and the lift propellers are respectively added at four positions on the motor arms, and are simultaneously initiated, so that the stability of the aerial vehicle is improved; when one lift motor at a certain position fails, the power of other lift motors corresponding to this position is adjusted to improve the safety of the aerial vehicle.

### Embodiment 2

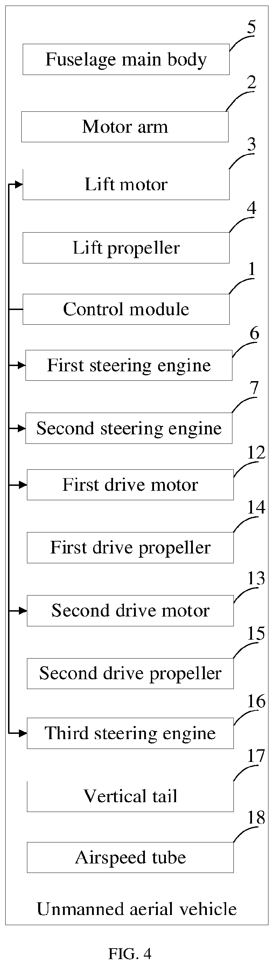

As shown in FIG. 4, the aerial vehicle of the present embodiment is a further improvement on Embodiment 1.

The aerial vehicle of the present embodiment further includes at least two first steering engines 6 and second steering engines 7.

The first steering engines 6 are fixedly provided in a left wing of the aerial vehicle, and the second steering engines 7 are fixedly provided in a right wing of the aerial vehicle.

Each first steering engine 6 is fixedly connected with one first control surface on the left wing, and each second steering engine 7 is fixedly connected with one second control surface on the right wing.

The control module 1 is electrically connected with the first steering engines 6 and the second steering engines 7.

The control module 1 is used to control the first steering engines 6 and the second steering engines 7 to adjust the deflecting directions of the first control surfaces and the second control surfaces.

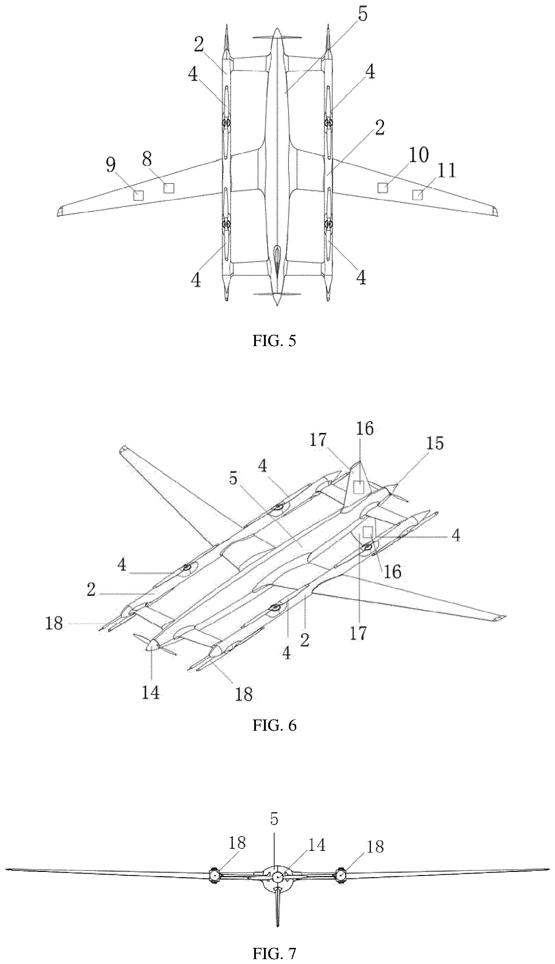

Specifically, as shown in FIG. 5, when the left wing includes two first steering engines 6, the first steering engines 6 include a first sub steering engine 8 and a second sub steering engine 9, and the second sub steering engine 9 is located on the outer side of the first sub steering engine 8. When the left wing includes two second steering engines 7, the second steering engines 7 include a third sub steering engine 10 and a fourth sub steering engine 11, and the fourth sub steering engine 11 is located on the outer side of the third sub steering engine 10.

The control module 1 is used to control the deflecting directions of both the first control surface corresponding to the first sub steering engine 8 and the second control surface corresponding to the third sub steering engine 10 to be upward, and control the deflecting directions of both the first control surface corresponding to the second sub steering engine 9 and the second control surface corresponding to the fourth sub steering engine 11 to be downward, so as to increase the lift force of the aerial vehicle and improve the flight performance of the aerial vehicle.

When the two first steering engines 6 are provided in the left wing, and the two second steering engines 7 are provided in the right wing, the control module 1 is used to control the corresponding deflecting directions of the two first control surfaces of the left wing to be opposite, and control the corresponding deflecting directions of the two second control surfaces of the right wing to be opposite; and at this time, this is equivalent to a function of spoilers.

When the two first steering engines 6 are provided in the left wing, and the two second steering engines 7 are provided in the right wing, the control module 1 is used to control the deflecting directions of the two first steering engines 6 and the two second steering engines 7 to be consistent; and at this time, if one steering engine fails, other steering engines still keep working, thereby ensuring that the safety of the aerial vehicle cannot be affected.

As shown in FIG. 4 and FIG. 6, the aerial vehicle of the present embodiment further includes a first drive motor 12, a second drive motor 13, a first drive propeller 14 and a second drive propeller 15.

Both the first drive motor 12 and the second drive motor 13 are provided in the fuselage main body 5, and are fixedly provided at the front end and the rear end of the fuselage main body 5 respectively.

The first drive propeller 14 is electrically connected with the first drive motor 12, and the first drive propeller 14 is fixedly provided at the front end of the fuselage main body 5. The second drive propeller 15 is electrically connected with the second drive motor 13, and the second drive propeller 15 is fixedly provided at the rear end of the fuselage main body 5. The first drive motor 12 and the second drive motor 13 are electrically connected with the control module 1 respectively.

The control module 1 is used to control the first drive motor 12 to be initiated to drive the first drive propeller 14 to start to rotate, so as to drive the aerial vehicle to fly forward; and/or,
the control module 1 is used to control the second drive motor 13 to be initiated to drive the second drive propeller 15 to start to rotate, so as to push the aerial vehicle to fly forward. That is, one single drive motor can be used to drive or push the aerial vehicle, and two drive manners can also be used and combined to better ensure the flight dynamics and safety of the aerial vehicle.

The control module 1 is used to control, when the first drive motor 12 fails, the second drive motor 13 to be initiated to drive the second drive propeller 15 to start to rotate, so as to push the aerial vehicle to fly forward; or,
the control module 1 is used to control, when the second drive motor 13 fails, the first drive motor 12 to be initiated to drive the first drive propeller 14 to start to rotate, so as to drive the aerial vehicle to fly forward. That is, when a certain drive manner loses the effect, the other drive manner is used immediately to keep drive control, and then the flight safety of the aerial vehicle is guaranteed, so that the safety of the whole aerial vehicle is ensured.

As shown in FIG. 4, the aerial vehicle of the present embodiment further includes third steering engines 16 and two vertical tails 17.

The two vertical tails 17 are provided on two sides of a vertical direction of the tail end of the fuselage main body 5 respectively.

At least one third steering engine 16 is provided in each vertical tail 17.

Each third steering engine 16 is fixedly connected with one third control surface on the vertical tail 17.

The third steering engines 16 are electrically connected with the control module 1.

The control module 1 is used to control the third steering engines 16 to adjust the deflecting directions of the third control surfaces.

As shown in FIG. 6, when one third steering engine 16 is provided on each vertical tail 17, the control module 1 is used to control, when one third steering engine 16 fails, the other third steering engine 16 to adjust the deflecting direction of the corresponding third control surface, so that the safety of the whole aerial vehicle is further guaranteed.

As shown in FIG. 4, the aerial vehicle of the present embodiment further includes at least two airspeed tubes 18.

The airspeed tubes 18 are respectively provided on the fuselage main body 5 and/or the motor arms 2.

The orientations of the airspeed tubes 18 are consistent with the flight direction of the aerial vehicle. The airspeed tubes 18 are electrically connected with the control module 1.

As shown in FIG. 6 and FIG. 7, when the aerial vehicle includes two airspeed tubes 18, each airspeed tube 18 is fixedly provided at the front end position of one motor arm 2. The airspeed tubes are added on both the left and right sides of the front end of the aerial vehicle, so that the interference of other structures is avoided; and furthermore, an airspeed corresponding to the unmanned aerial vehicle is finally determined by means of a plurality of pieces of airspeed data, so that the accuracy of the existing airspeed data is improved, and the flight safety control for the aerial vehicle is further ensured.

In the present embodiment, by respectively adding the lift motors and the lift propellers at the four positions of the motor arms, adding the steering engines on the left and right wings, providing the front pulling and back pushing drive motors, providing the vertical tails of the longitudinally symmetrical structures and adding the airspeed tubes on both the left and right sides of the front end of the aerial vehicle, the stability and the safety of the aerial vehicle are effectively improved.

### Embodiment 3

A control method for an unmanned aerial vehicle of the present embodiment is implemented in the unmanned aerial vehicle of any one of Embodiment 1 or Embodiment 2.

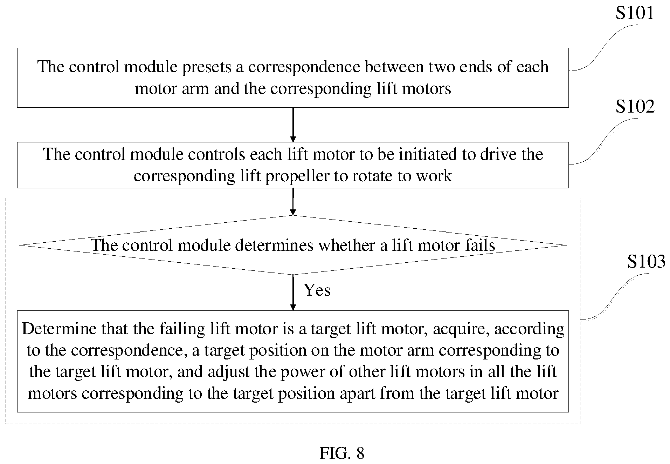

As shown in FIG. 8, the control method of the present embodiment includes that:
S101, the control module presets a correspondence between two ends of each motor arm and the corresponding lift motors.

Preferably, the number of lift motors corresponding to each end of each motor arm is equal.

S102, the control module controls each lift motor to be initiated to drive the corresponding lift propeller to rotate to work.

Specifically, as shown in FIG. 2, when two ends of the motor arms are respectively provided with two lift motors, each lift motor is fixedly connected with one lift propeller; and at this time, the aerial vehicle includes two motor arms; one end of each motor arm is correspondingly provided with two lift motors and corresponding lift propellers, totally including 8 lift motors and 8 lift propellers. In the cruise process of the aerial vehicle, the 8 lift motors are controlled to be simultaneously initiated to work, thereby guaranteeing the stability of the aerial vehicle.

S 103, the control module determines whether a lift motor fails, determines that the failing lift motor is a target lift motor if so, acquires, according to the correspondence, a target position on the motor arm corresponding to the target lift motor, and adjusts the power of other lift motors in all the lift motors corresponding to the target position apart from the target lift motor.

Specifically, the power of each of the residual lift motors corresponding to the target position can be controlled to increase the same power, or only the power of partial lift motors is increased, thereby effectively avoiding such a phenomenon of crash and damage of the whole aerial vehicle caused by the fact that one lift motor loses the lift effect.

In the present embodiment, by means of the lift motors and the lift propellers which are added on the motor arms to perform flight control, the stability of the aerial vehicle is improved; and when one lift motor at a certain position fails, the power of other lift motors corresponding to this position is adjusted immediately, so that the safety of the aerial vehicle is improved.

### Embodiment 4

A control method for an unmanned aerial vehicle of the present embodiment is a further improvement on Embodiment 3. Specifically:
when the unmanned aerial vehicle further includes at least two first steering engines and second steering engines, the first steering engines are fixedly provided in a left wing of the aerial vehicle, the second steering engines are fixedly provided in a right wing of the aerial vehicle, each first steering engine is fixedly connected with one first control surface on the left wing, and each second steering engine is fixedly connected with one second control surface on the right wing, the control method further includes that:
S 104, the control module controls the first steering engines and the second steering engines to adjust the deflecting directions of the first control surfaces and the second control surfaces.

When the left wing includes two first steering engines, the first steering engines include a first sub steering engine and a second sub steering engine, and the second sub steering engine is located on the outer side of the first sub steering engine;

when the left wing includes two second steering engines, the second steering engines include a third sub steering engine and a fourth sub steering engine, and the fourth sub steering engine is located on the outer side of the third sub steering engine; the step S104 specifically includes that:
S1041, the control module controls the deflecting directions of both the first control surface corresponding to the first sub steering engine and the second control surface corresponding to the third sub steering engine to be upward, and controls the deflecting directions of both the first control surface corresponding to the second sub steering engine and the second control surface corresponding to the fourth sub steering engine to be downward, so as to increase the lift force of the aerial vehicle and improve the flight performance of the aerial vehicle.

When the two first steering engines are provided in the left wing, and the two second steering engines are provided in the right wing, the step S104 specifically includes that:

S1042, the control module controls the corresponding deflecting directions of the two first control surfaces of the left wing to be opposite, and controls the corresponding deflecting directions of the two second control surfaces of the right wing to be opposite; and at this time, this is equivalent to a function of spoilers.

When the two first steering engines are provided in the left wing, and the two second steering engines are provided in the right wing, the step S104 specifically includes that:
S1043, the control module controls the deflecting directions of the two first steering engines and the two second steering engines to be consistent; and at this time, if one steering engine fails, other steering engines still keep working, thereby ensuring that the safety of the aerial vehicle cannot be affected.

When the aerial vehicle further includes a first drive motor, a second drive motor, a first drive propeller and a second drive propeller, the control method of the present embodiment further includes that:
S105, the control module controls the first drive motor to be initiated to drive the first drive propeller to start to rotate, so as to drive the aerial vehicle to fly forward; and/or,
the control module controls the second drive motor to be initiated to drive the second drive propeller to start to rotate, so as to push the aerial vehicle to fly forward. That is, one single drive motor can be used to drive or push the aerial vehicle, and two drive manners can also be used and combined to better ensure the flight dynamics and safety of the aerial vehicle.

Specifically, the step S105 includes that:
the control module controls, when the first drive motor fails, the second drive motor to be initiated to drive the second drive propeller to start to rotate, so as to push the aerial vehicle to fly forward; or,
the control module controls, when the second drive motor fails, the first drive motor to be initiated to drive the first drive propeller to start to rotate, so as to drive the aerial vehicle to fly forward. That is, when a certain drive manner loses the effect, the other drive manner is used immediately to keep drive control, and then the flight safety of the aerial vehicle is guaranteed, so that the safety of the whole aerial vehicle is ensured.

When the aerial vehicle further includes third steering engines and two vertical tails, as shown in FIG. 13, the control method of the present invention further includes that:
S106, the control module controls the third steering engines to adjust the deflecting directions of the third control surfaces.

When one third steering engine is provided on each vertical tail, the step S106 includes that:
the control module controls, when one third steering engine fails and the aerial vehicle includes two motor arms, the other third steering engine to adjust the deflecting direction of the corresponding third control surface, so that the safety of the whole aerial vehicle is further ensured.

When the aerial vehicle includes two airspeed tubes, each airspeed tube is fixedly provided at the front end position of one motor arm. The airspeed tubes are added on both the left and right sides of the front end of the aerial vehicle, so that the interference of other structures is avoided; and furthermore, an airspeed corresponding to the unmanned aerial vehicle is finally determined by means of a plurality of pieces of airspeed data, so that the accuracy of the existing airspeed data is improved, and the flight safety control for the aerial vehicle is further ensured.

In the present embodiment, by means of the lift motors and the lift propellers which are added at the four positions of the motor arms, the steering engines added on the left and right wings, the front pulling and back pushing drive motors provided at the front end and the rear end of the fuselage main body, the added vertical tails of the longitudinally symmetrical structures and the airspeed tubes added on both the left and right sides of the front end of the aerial vehicle, the stability and the safety of the aerial vehicle are effectively improved.

Although the specific implementation modes of the present invention have been described above, those skilled in the art should understand that this is only an example, and the protection scope of the present invention is defined by the appended claims. Those skilled in the art can make various changes or modifications to these implementations without departing from the principle of the present invention, but these changes and modifications shall all fall within the protection scope of the present invention.

## Claims

1. An unmanned aerial vehicle, comprising a control module (1), a fuselage main body (5), motor arms (2), a plurality of
lift motors (3) and lift propellers (4), wherein
the control module (1) is provided in the fuselage main body (5) of the unmanned aerial vehicle;
the motor arms (2) are fixedly provided on two sides of the fuselage main body (5) in parallel to one another and to the fuselage main body (5);
the lift motors (3) are electrically connected with the control module (1);
two ends of the motor arms (2) are respectively provided with at least two of the lift motors (3); the lift motors (3) are provided in the motor arms (2), and the lift propellers (4) are fixedly provided on the motor arms (2);
one lift motor (3) is fixedly connected with at least one lift propeller (4);
the control module (1) is configured to preset a correspondence between two ends of each motor arm (2) and the corresponding lift motors (3);
the control module (1) is configured to control each lift motor (3) to be initiated to drive the corresponding lift propeller (4) to rotate to work;
the control module (1) is also configured to determine whether a lift motor (3) fails, if so, acquire a position on the motor arm (2) corresponding to the failing lift motor, and adjust the power of other lift motors (3) in all the other lift motors corresponding to a position different from the failing lift motor, wherein
the unmanned aerial vehicle is further comprising third steering engines (16) and two vertical tails (17),
wherein the two vertical tails (17) are provided on two sides of a vertical direction of the tail end of the fuselage main body (5) respectively;
at least one third steering engine (16) is provided in each vertical tail (17);
each third steering engine (16) is fixedly connected with one third control surface on the vertical tail (17);
the third steering engines (16) are electrically connected with the control module (1);
the control module (1) is configured to control the third steering engines (16) to adjust the deflecting directions of the third control surfaces.

2. The unmanned aerial vehicle according to claim 1, further comprising at least two first steering engines (6) and second steering engines (7), wherein
the first steering engines (6) are fixedly provided in a left wing of the unmanned aerial vehicle, and the second steering engines (7) are fixedly provided in a right wing of the unmanned aerial vehicle;
each first steering engine (6) is fixedly connected with one first control surface on the left wing, and each second steering engine (7) is fixedly connected with one second control surface on the right wing;
the control module (1) is electrically connected with the first steering engines (6) and the second steering engines (7) respectively;
the control module (1) is configured to control the first steering engines (6) and the second steering engines (7) to adjust the deflecting directions of the first control surfaces and the second control surfaces.

3. The unmanned aerial vehicle according to claim 2, wherein when the left wing comprises two first steering engines (6), the first steering engines (6) comprise a first sub steering engine (8) and a second sub steering engine (9), and the second sub steering engine (9) is located on the outer side of the first sub steering engine (8);
when the left wing comprises two second steering engines (7), the second steering engines (7) comprise a third sub steering engine (10) and a fourth sub steering engine (11), and the fourth sub steering engine (11) is located on the outer side of the third sub steering engine (10);
the control module (1) is configured to control the deflecting directions of both the first control surface corresponding to the first sub steering engine (8) and the second control surface corresponding to the third sub steering engine (10) to be upward, and control the deflecting directions of both the first control surface corresponding to the second sub steering engine (9) and the second control surface corresponding to the fourth sub steering engine (11) to be downward.

4. The unmanned aerial vehicle according to claim 2, wherein when two first steering engines (6) are provided in the left wing, and two second steering engines (7) are provided in the right wing, the control module (1) is configured to control the deflecting directions corresponding to the two first control surfaces of the left wing to be opposite, and control the deflecting directions corresponding to the two second control surfaces of the right wing to be opposite; or, the control module (1) is used to control the deflecting directions of the two first steering engines (6) and the two second steering engines (7) to be consistent.

5. The unmanned aerial vehicle according to claim 1, further comprising a first drive motor (12), a second drive motor (13), a first drive propeller (14) and a second drive propeller (15), wherein both the first drive motor (12) and the second drive motor (13) are provided in the fuselage main body (5), and are fixedly provided at the front end and the rear end of the fuselage main body (5) respectively;
the first drive propeller (14) is electrically connected with the first drive motor (12), and the first drive propeller (14) is fixedly provided at the front end of the fuselage main body (5);
the second drive propeller (15) is electrically connected with the second drive motor (13), and
the second drive propeller (15) is fixedly provided at the rear end of the fuselage main body (5);
the first drive motor (12) and the second drive motor (13) are electrically connected with the control module (1) respectively;
the control module (1) is configured to control the first drive motor (12) to be initiated to drive the first drive propeller (14) to start to rotate, so as to drive the unmanned aerial vehicle to fly forward; and/or,
the control module (1) is configured to control the second drive motor (13) to be initiated to drive the second drive propeller (15) to start to rotate, so as to push the unmanned aerial vehicle to fly forward.

6. The unmanned aerial vehicle according to claim 5, wherein the control module (1) is used to control, when the first drive motor (12) fails, the second drive motor (13) to be initiated to drive the second drive propeller (15) to start to rotate, so as to push the unmanned aerial vehicle to fly forward; or,
the control module (1) is configured to control, when the second drive motor (13) fails, the first drive motor (12) to be initiated to drive the first drive propeller (14) to start to rotate, so as to drive the unmanned aerial vehicle to fly forward.

7. The unmanned aerial vehicle according to claim 1, wherein when one third steering engine (16) is provided on each vertical tail (17), the control module (1) is configured to control, when one
third steering engine fails, the other third steering engine to adjust the deflecting direction of the corresponding third control surface.

8. The unmanned aerial vehicle according to claim 1, further comprising at least two airspeed tubes (18),
wherein the airspeed tubes (18) are respectively provided on the fuselage main body (5) and/or
the motor arms (2);
the orientations of the airspeed tubes (18) are consistent with the flight direction of the unmanned aerial vehicle.

9. The unmanned aerial vehicle according to claim 8, wherein when two ends of the motor arms (2) are respectively provided with two lift motors (3), each lift motor (3) is fixedly connected with one lift propeller (4);
when the unmanned aerial vehicle comprises two airspeed tubes (18), each airspeed tube (18) is fixedly provided at the front end position of one motor arm (2).

10. A control method for an unmanned aerial vehicle as in claim 1, wherein the control method comprises:
presetting, by the control module (1), a correspondence between two ends of each motor arm (2) and the corresponding lift motors (3);
controlling, by the control module (1), each lift motor (3) to be initiated to drive the corresponding lift propeller (4) to rotate to work;
determining, by the control module (1), whether a lift motor (3) fails, if so, acquiring a position on the motor arm (2) corresponding to the failing lift motor, and adjusting the power of other lift motors (3) in all the other lift motors corresponding to a position different from the failing lift motor, wherein
the control method further comprises:
controlling, by the control module (1), the third steering engines (16) to adjust the deflecting directions of the third control surfaces.

11. The control method for the unmanned aerial vehicle according to claim 10, wherein when the aerial vehicle further comprises at least two first steering engines (6) and second steering engines (7), the first steering engines (6) are fixedly provided in a left wing of the aerial vehicle, the second steering engines (7) are fixedly provided in a right wing of the aerial vehicle, each first steering engine (6) is fixedly connected with one first control surface on the left wing, and each second steering engine (7) is fixedly connected with one second control surface on the right wing, the control method further comprises:
controlling, by the control module (1), the first steering engines (6) and the second steering engines (7) to adjust the deflecting directions of the first control surfaces and the second control surfaces.

12. The control method for the unmanned aerial vehicle according to claim 11, wherein when the left wing comprises two first steering engines (6), the first steering engines (6) comprise a first sub steering engine (8) and a second sub steering engine (9), and the second sub steering engine (9) is located on the outer side of the first sub steering engine (8); when the left wing comprises two second steering engines (7), the second steering engines (7) comprise a third sub steering engine (10) and a fourth sub steering engine (11), and the fourth sub steering engine (11) is located on the outer side of the third sub steering engine (10); the control method further comprises:
controlling, by the control module (1), the deflecting directions of both the first control surface corresponding to the first sub steering engine (8) and the second control surface corresponding to the third sub steering engine (10) to be upward, and controlling, by the control module (1),
the deflecting directions of both the first control surface corresponding to the second sub steering engine (9) and the second control surface corresponding to the fourth sub steering engine (11) to be downward.

13. The control method for the unmanned aerial vehicle according to claim 11, wherein when two first steering engines (6) are provided in the left wing, and two second steering engines (7) are provided in the right wing, the control method further comprises:
controlling, by the control module (1), the corresponding deflecting directions of the two first control surfaces of the left wing to be opposite, and controlling, by the control module (1), the corresponding deflecting directions of the two second control surfaces of the right wing to be opposite; or, control, by the control module (1), the deflecting directions of the two first steering engines (6) and the two second steering engines (7) to be consistent.

14. The control method for the unmanned aerial vehicle according to claim 10, wherein when the aerial vehicle further comprises a first drive motor (12), a second drive motor (13), a first drive propeller (14) and a second drive propeller (15), the control method further comprises:
controlling, by the control module (1), the first drive motor (12) to be initiated to drive the first drive propeller (14) to start to rotate, so as to drive the aerial vehicle to fly forward; and/or,
controlling, by the control module (1), the second drive motor (13) to be initiated to drive the second drive propeller (15) to start to rotate, so as to push the aerial vehicle to fly forward.

15. The control method for the unmanned aerial vehicle according to claim 14, further comprising:
when the first drive motor (12) fails, controlling, by the control module (1), the second drive motor (13) to be initiated to drive the second drive propeller (15) to start to rotate, so as to push the aerial vehicle to fly forward; or,
when the second drive motor (13) fails, controlling, by the control module (1), the first drive motor (12) to be initiated to drive the first drive propeller (14) to start to rotate, so as to drive the aerial vehicle to fly forward.

16. The control method for the unmanned aerial vehicle according to claim 10, wherein when one third steering engine (16) is provided on each vertical tail (17), the control method further comprises:
when one third steering engine fails, controlling, by the control module (1), the other third steering engine to adjust the deflecting direction of the corresponding third control surface.

## Patentansprüche

1. Unbemanntes Luftfahrzeug, das ein Steuermodul (1), einen Flugzeugrumpfhauptkörper (5), Motorarme (2), mehrere Hubmotoren (3) und Hubpropeller (4) umfasst, wobei
das Steuermodul (1) in dem Flugzeugrumpfhauptkörper (5) des unbemannten Luftfahrzeugs vorgesehen ist;
die Motorarme (2) fest auf zwei Seiten des Flugzeugrumpfhauptkörpers (5) parallel zueinander und zu dem Flugzeugrumpfhauptkörper (5) vorgesehen sind;
die Hubmotoren (3) mit dem Steuermodul (1) elektrisch verbunden sind;
zwei Enden der Motorarme (2) jeweils mit mindestens zwei der Hubmotoren (3) ausgestattet sind;
die Hubmotoren (3) in den Motorarmen (2) vorgesehen sind und die Hubpropeller (4) fest auf den Motorarmen (2) vorgesehen sind;
ein Hubmotor (3) fest mit mindestens einem Hubpropeller (4) verbunden ist;
das Steuermodul (1) konfiguriert ist, eine Übereinstimmung zwischen zwei Enden jedes Motorarms (2) und den entsprechenden Hubmotoren (3) im Voraus einzustellen;
das Steuermodul (1) konfiguriert ist, jeden Hubmotor (3) zu steuern, um ihn zu veranlassen, den entsprechenden Hubpropeller (4) rotatorisch anzutreiben, um zu arbeiten;
das Steuermodul (1) außerdem konfiguriert ist, zu bestimmen, ob ein Hubmotor (3) ausfällt, und wenn ja, eine Position auf dem Motorarm (2) zu erfassen, die dem ausgefallenen Hubmotor entspricht, und die Leistung anderer Hubmotoren (3) in allen anderen Hubmotoren, die einer Position entsprechen, die von dem ausgefallenen Hubmotor verschieden ist, anzupassen, wobei
das unbemannte Luftfahrzeug ferner dritte Lenkmaschinen (16) und zwei vertikale Hecks (17) umfasst,
wobei die zwei vertikalen Hecks (17) jeweils auf zwei Seiten einer vertikalen Richtung des Heckendes des Flugzeugrumpfhauptkörpers (5) vorgesehen sind;
mindestens eine dritte Lenkmaschine (16) in jedem vertikalen Heck (17) vorgesehen ist;
jede dritte Lenkmaschine (16) mit einer dritten Steuerfläche auf dem vertikalen Heck (17) fest verbunden ist;
die dritten Lenkmaschinen (16) mit dem Steuermodul (1) elektrisch verbunden sind; und
das Steuermodul (1) konfiguriert ist, die dritten Lenkmaschinen (16) zu steuern, um die Ablenkungsrichtungen der dritten Steuerflächen anzupassen.

2. Unbemanntes Luftfahrzeug nach Anspruch 1, das ferner mindestens zwei erste Lenkmaschinen (6) und zweite Lenkmaschinen (7) umfasst, wobei
die ersten Lenkmaschinen (6) in einem linken Flügel des unbemannten Luftfahrzeugs fest vorgesehen sind und die zweiten Lenkmaschinen (7) in einem rechten Flügel des unbemannten Luftfahrzeugs fest vorgesehen sind;
jede erste Lenkmaschine (6) mit einer ersten Steuerfläche auf dem linken Flügel fest verbunden ist und jede zweite Lenkmaschine (7) mit einer zweiten Steuerfläche auf dem rechten Flügel fest verbunden ist;
das Steuermodul (1) jeweils mit den ersten Lenkmaschinen (6) und den zweiten Lenkmaschinen (7) elektrisch verbunden ist;
das Steuermodul (1) konfiguriert ist, die ersten Lenkmaschinen (6) und die zweiten Lenkmaschinen (7) zu steuern, um die Ablenkungsrichtungen der ersten Steuerflächen und der zweiten Steuerflächen anzupassen.

3. Unbemanntes Luftfahrzeug nach Anspruch 2, wobei dann, wenn der linke Flügel zwei erste Lenkmaschinen (6) umfasst, die ersten Lenkmaschinen (6) eine erste Unterlenkmaschine (8) und eine zweite Unterlenkmaschine (9) umfassen, und sich die zweite Unterlenkmaschine (9) auf der äußeren Seite der ersten Unterlenkmaschine (8) befindet;
dann, wenn der linke Flügel zwei zweite Lenkmaschinen (7) umfasst, die zweiten Lenkmaschinen (7) eine dritte Unterlenkmaschine (10) und eine vierte Unterlenkmaschine (11) umfassen und sich die vierte Unterlenkmaschine (11) auf der äußeren Seite der dritten Unterlenkmaschine (10) befindet;
das Steuermodul (1) konfiguriert ist, die Ablenkungsrichtungen sowohl der ersten Steuerfläche, die der ersten Unterlenkmaschine (8) entspricht, als auch der zweiten Steuerfläche, die der dritten Unterlenkmaschine (10) entspricht, so zu steuern, dass sie aufwärts weisen, und die Ablenkungsrichtungen sowohl der ersten Steuerfläche, die der zweiten Unterlenkmaschine (9) entspricht, als auch der zweiten Steuerfläche, die der vierten Unterlenkmaschine (11) entspricht, so zu steuern, dass sie abwärts weisen.

4. Unbemanntes Luftfahrzeug nach Anspruch 2, wobei dann, wenn zwei erste Lenkmaschinen (6) in dem linken Flügel vorgesehen sind und zwei zweite Lenkmaschinen (7) in dem rechten Flügel vorgesehen sind, das Steuermodul (1) konfiguriert ist, die Ablenkungsrichtungen, die den zwei ersten Steuerflächen des linken Flügels entsprechen, so zu steuern, dass sie entgegengesetzt sind, und die Ablenkungsrichtungen, die den zwei zweiten Steuerflächen des rechten Flügels entsprechen, so zu steuern, dass sie entgegengesetzt sind; oder das Steuermodul (1) verwendet wird, die Ablenkungsrichtungen der zwei ersten Lenkmaschinen (6) und der zwei zweiten Lenkmaschinen (7) so zu steuern, dass sie konsistent sind.

5. Unbemanntes Luftfahrzeug nach Anspruch 1, das ferner einen ersten Antriebsmotor (12), einen zweiten Antriebsmotor (13), einen ersten Antriebspropeller (14) und einen zweiten Antriebspropeller (15) umfasst, wobei sowohl der erste Antriebsmotor (12) als auch der zweite Antriebsmotor (13) in dem Flugzeugrumpfhauptkörper (5) vorgesehen sind und jeweils an dem vorderen Ende und dem hinteren Ende des Flugzeugrumpfhauptkörpers (5) fest vorgesehen sind;
wobei der erste Antriebspropeller (14) mit dem ersten Antriebsmotor (12) elektrisch verbunden ist und der erste Antriebspropeller (14) an dem vorderen Ende des Flugzeugrumpfhauptkörpers (5) fest vorgesehen ist;
der zweite Antriebspropeller (15) mit dem zweiten Antriebsmotor (13) elektrisch verbunden ist und der zweite Antriebspropeller (15) an dem hinteren Ende des Flugzeugrumpfhauptkörpers (5) fest vorgesehen ist;
der erste Antriebsmotor (12) und der zweite Antriebsmotor (13) jeweils mit dem Steuermodul (1) elektrisch verbunden sind;
das Steuermodul (1) konfiguriert ist, den ersten Antriebsmotor (12) zu steuern, um zu bewirken, das der erste Antriebspropeller (14) angetrieben wird, um mit dem Drehen zu beginnen, um das unbemannte Luftfahrzeug anzuschieben, um vorwärts zu fliegen; und/oder
das Steuermodul (1) konfiguriert ist, den zweiten Antriebsmotor (13) zu steuern, um zu bewirken, dass der zweite Antriebspropeller (15) angetrieben wird, um mit dem Drehen zu beginnen, um das unbemannte Luftfahrzeug anzuschieben, um vorwärts zu fliegen.

6. Unbemanntes Luftfahrzeug nach Anspruch 5, wobei das Steuermodul (1) verwendet wird, um dann, wenn der erste Antriebsmotor (12) ausfällt, den zweiten Antriebsmotor (13) zu steuern, um zu bewirken, das der zweite Antriebspropeller (15) angetrieben wird, um mit dem Drehen zu beginnen, um das unbemannte Luftfahrzeug anzuschieben, um vorwärts zu fliegen; oder
das Steuermodul (1) konfiguriert ist, dann, wenn der zweite Antriebsmotor (13) ausfällt, den ersten Antriebsmotor (12) zu steuern, um zu bewirken, dass der erste Antriebspropeller (14) angetrieben wird, um mit dem Drehen zu beginnen, um das unbemannte Luftfahrzeug anzuschieben, um vorwärts zu fliegen.

7. Unbemanntes Luftfahrzeug nach Anspruch 1, wobei dann, wenn eine dritte Lenkmaschine (16) auf jedem vertikalen Heck (17) vorgesehen ist, das Steuermodul (1) konfiguriert ist, dann, wenn eine dritte Lenkmaschine ausfällt, die andere dritte Lenkmaschine zu steuern, die Ablenkungsrichtung der entsprechenden dritten Steuerfläche anzupassen.

8. Unbemanntes Luftfahrzeug nach Anspruch 1, das ferner mindestens zwei Fluggeschwindigkeitsröhren (18) umfasst,
wobei die Fluggeschwindigkeitsröhren (18) jeweils auf dem Flugzeugrumpfhauptkörper (5) und/oder den Motorarmen (2) vorgesehen sind;
wobei die Ausrichtungen der Fluggeschwindigkeitsröhren (18) mit der Flugrichtung des unbemannten Luftfahrzeugs konsistent sind.

9. Unbemanntes Luftfahrzeug nach Anspruch 8, wobei dann, wenn zwei Enden der Motorarme (2) jeweils mit zwei Hubmotoren (3) ausgestattet sind, jeder Hubmotor (3) mit einem Hubpropeller (4) fest verbunden ist;
dann, wenn das unbemannte Luftfahrzeug zwei Fluggeschwindigkeitsröhren (18) umfasst, jede Fluggeschwindigkeitsröhre (18) fest an der vorderen Endposition eines Motorarms (2) vorgesehen ist.

10. Steuerverfahren für ein unbemanntes Luftfahrzeug nach Anspruch 1, wobei das Steuerverfahren umfasst:
im Voraus Einstellen durch das Steuermodul (1) einer Übereinstimmung zwischen zwei Enden jedes Motorarms (2) und den entsprechenden Hubmotoren (3);
Steuern durch das Steuermodul (1) jedes Hubmotors (2), ausgelöst zu werden, den entsprechenden Hubpropeller (4) anzutreiben, um mit dem Drehen zu beginnen, um zu arbeiten;
Bestimmen durch das Steuermodul (1), ob ein Hubmotor (3) ausfällt, und wenn ja, Erfassen einer Position auf dem Motorarm (2), der dem ausgefallenen Hubmotor entspricht, und Anpassen der Leistung anderer Hubmotoren (3) in allen anderen Hubmotoren, die einer Position entsprechen, die von dem ausgefallenen Hubmotor verschieden ist, wobei
das Steuerverfahren ferner umfasst:
Steuern durch das Steuermodul (1) der dritten Lenkmaschinen (16), um die Ablenkungsrichtungen der dritten Steuerflächen anzupassen.

11. Steuerverfahren für das unbemannte Luftfahrzeug nach Anspruch 10, wobei dann, wenn das Luftfahrzeug ferner mindestens zwei erste Lenkmaschinen (6) und zweite Lenkmaschinen (7) umfasst, die ersten Lenkmaschinen (6) in einem linken Flügel des Luftfahrzeugs fest vorgesehen sind, die zweiten Lenkmaschinen (7) in einem rechten Flügel des Luftfahrzeugs fest vorgesehen sind, jede erste Lenkmaschine (6) mit einer ersten Steuerfläche auf dem linken Flügel fest verbunden ist und jede zweite Lenkmaschine (7) mit einer zweiten Steuerfläche auf dem rechten Flügel fest verbunden ist, wobei das Steuerverfahren ferner umfasst:
Steuern durch das Steuermodul (1) der ersten Lenkmaschinen (6) und der zweiten Lenkmaschinen (7), um die Ablenkungsrichtungen der ersten Steuerflächen und der zweiten Steuerflächen anzupassen.

12. Steuerverfahren für das unbemannte Luftfahrzeug nach Anspruch 11, wobei dann, wenn der linken Flügel zwei erste Lenkmaschinen (6) umfasst, die ersten Lenkmaschinen (6) eine erste Unterlenkmaschine (8) und eine zweite Unterlenkmaschine (9) umfassen und sich die zweite Unterlenkmaschine (9) auf der äußeren Seite der ersten Unterlenkmaschine (8) befindet; dann, wenn der linke Flügel zwei zweite Lenkmaschinen (7) umfasst, die zweiten Lenkmaschinen (7) eine dritte Unterlenkmaschine (10) und eine vierte Unterlenkmaschine (11) umfassen und sich die vierte Unterlenkmaschine (11) auf der äußeren Seite der dritten Unterlenkmaschine (10) befindet; wobei das Steuerverfahren ferner umfasst:
Steuern durch das Steuermodul (1) der Ablenkungsrichtungen sowohl der ersten Steuerfläche, die der ersten Unterlenkmaschine (8) entspricht, als auch der zweiten Steuerfläche, die der dritten Unterlenkmaschine (10) entspricht, so, dass sie aufwärts weisen, und Steuern durch das Steuermodul (1) der Ablenkungsrichtungen sowohl der ersten Steuerfläche, die der zweiten Unterlenkmaschine (9) entspricht, als auch der zweiten Steuerfläche, die der vierten Unterlenkmaschine (11) entspricht, so, dass die abwärts weisen.

13. Steuerverfahren für das unbemannte Luftfahrzeug nach Anspruch 11, wobei dann, wenn zwei erste Lenkmaschinen (6) in dem linken Flügel vorgesehen sind und zwei zweite Lenkmaschinen (7) in dem rechten Flügel vorgesehen sind, das Steuerverfahren ferner umfasst:
Steuern durch das Steuermodul (1) der entsprechenden Ablenkungsrichtungen der zwei ersten Steuerflächen des linken Flügels so, dass sie entgegengesetzt sind, und Steuern durch das Steuermodul (1) der entsprechenden Ablenkungsrichtungen der zwei zweiten Steuerflächen des rechten Flügels so, dass sie entgegengesetzt sind; oder Steuern durch das Steuermodul (1) der Ablenkungsrichtungen der zwei ersten Lenkmaschinen (6) und der zwei zweiten Lenkmaschinen (7) so, dass sie konsistent sind.

14. Steuerverfahren für das unbemannte Luftfahrzeug nach Anspruch 10, wobei dann, wenn das Luftfahrzeug ferner einen ersten Antriebsmotor (12), einen zweiten Antriebsmotor (13), einen ersten Antriebspropeller (14) und einen zweiten Antriebspropeller (15) umfasst, das Steuerverfahren ferner umfasst:
Steuern durch das Steuermodul (1) des ersten Antriebsmotors (12), um zu bewirken, das der erste Antriebspropeller (14) angetrieben wird, um mit dem Drehen zu beginnen, um das Luftfahrzeug anzuschieben, um vorwärts zu fliegen; und/oder
Steuern durch das Steuermodul (1) des zweiten Antriebsmotors (13), um zu bewirken, das der zweite Antriebspropeller (15) angetrieben wird, um mit dem Drehen zu beginnen, um das Luftfahrzeug anzuschieben, um vorwärts zu fliegen.

15. Steuerverfahren für das unbemannte Luftfahrzeug nach Anspruch 14, das ferner umfasst:
dann, wenn der erste Antriebsmotor (12) ausfällt, Steuern durch das Steuermodul (1) des zweiten Antriebsmotors (13), um zu bewirken, das der zweite Antriebspropeller (15) angetrieben wird, um mit dem Drehen zu beginnen, um das Luftfahrzeug anzuschieben, um vorwärts zu fliegen; oder
dann, wenn der zweite Antriebsmotor (13) ausfällt, Steuern durch das Steuermodul (1) des ersten Antriebsmotors (12), um zu bewirken, das der erste Antriebspropeller (14) angetrieben wird, um mit dem Drehen zu beginnen, um das Luftfahrzeug anzuschieben, um vorwärts zu fliegen.

16. Steuerverfahren für das unbemannte Luftfahrzeug nach Anspruch 10, wobei dann, wenn eine dritte Lenkmaschine (16) auf jedem vertikalen Heck (17) vorgesehen ist, das Steuerverfahren ferner umfasst:
dann, wenn eine dritte Lenkmaschine ausfällt, Steuern durch das Steuermodul (1) der anderen dritten Lenkmaschine, die Ablenkungsrichtung der entsprechenden dritten Steuerfläche anzupassen.

## Revendications

1. Véhicule aérien sans équipage, comprenant un module de commande (1), un corps principal de fuselage (5), des bras à moteur (2), une pluralité de moteurs de sustentation (3) et d'hélices de sustentation (4), dans lequel le module de commande (1) est prévu dans le corps principal de fuselage (5) du véhicule aérien sans équipage ;
les bras à moteur (2) sont prévus de manière fixe sur deux côtés du corps principal de fuselage (5) en parallèle les uns aux autres et par rapport au corps principal de fuselage (5) ;
les moteurs de sustentation (3) sont connectés électriquement au module de commande (1) ;
deux extrémités des bras à moteur (2) sont dotées respectivement d'au moins deux des moteurs de sustentation (3) ;
les moteurs de sustentation (3) sont prévus dans les bras à moteur (2), et les hélices de sustentation (4) sont prévues de manière fixe sur les bras à moteur (2) ;
un moteur de sustentation (3) est connecté de manière fixe à au moins une hélice de sustentation (4) ;
le module de commande (1) est configuré pour fixer au préalable une correspondance entre deux extrémités de chaque bras de moteur (2) et les moteurs de sustentation correspondants (3) ;
le module de commande (1) est configuré pour commander chaque moteur de sustentation (3) pour qu'il soit initié à entraîner l'hélice de sustentation correspondante (4) à se mettre en rotation pour fonctionner ;
le module de commande (1) est également configuré pour déterminer si un moteur de sustentation (3) est défaillant, si tel est le cas, acquérir une position concernant le bras à moteur (2) correspondant au moteur de sustentation défaillant, et ajuster la puissance d'autres moteurs de sustentation (3) dans la totalité des autres moteurs de sustentation correspondant à une position différente par rapport au moteur de sustentation défaillant, dans lequel
le véhicule aérien sans équipage comprend en outre des troisièmes moteurs de direction (16) et deux queues verticales (17),
dans lequel les deux queues verticales (17) sont prévues sur deux côtés d'une direction verticale de l'extrémité de queue du corps principal de fuselage (5) respectivement ;
au moins un troisième moteur de direction (16) est prévu dans chaque queue verticale (17) ;
chaque troisième moteur de direction (16) est connecté de manière fixe à une troisième surface de commande sur l'axe vertical (17) ;
les troisièmes moteurs de direction (16) sont connectés électriquement au module de commande (1) ;
le module de commande (1) est configuré pour commander les troisièmes moteurs de direction (16) pour ajuster les directions de déflexion des troisièmes surfaces de commande.

2. Véhicule aérien sans équipage selon la revendication 1, comprenant en outre au moins deux premiers moteurs de direction (6) et deuxièmes moteurs direction (7), dans lequel
les premiers moteurs de direction (6) sont prévus de manière fixe dans une voilure de gauche du véhicule aérien sans équipage, et les deuxièmes moteurs de direction (7) sont prévus de manière fixe dans une voilure de droite du véhicule aérien sans équipage ;
chaque premier moteur de direction (6) est connecté de manière fixe à une première surface de commande sur la voilure de gauche, et chaque deuxième moteur de direction (7) est connecté de manière fixe à une deuxième surface de commande sur la voilure de droite ;
le module de commande (1) est connecté électriquement aux premiers moteurs de direction (6) et aux deuxièmes moteurs de direction (7) respectivement ;
le module de commande (1) est configuré pour commander les premiers moteurs de direction (6) et les deuxièmes moteurs de direction (7) pour ajuster les directions de déflexion des premières surfaces de commande et des deuxièmes surfaces de commande.

3. Véhicule aérien sans équipage selon la revendication 2, dans lequel, quand la voilure de gauche comprend deux premiers moteurs de direction (6), les premiers moteurs de direction (6) comprennent un premier moteur de direction auxiliaire (8) et un deuxième moteur de direction auxiliaire (9), et le deuxième moteur de direction auxiliaire (9) est situé sur le côté extérieur du premier moteur de direction auxiliaire (8) ;
quand la voilure de gauche comprend deux deuxième moteurs de direction (7), les deuxièmes moteurs de direction (7) comprennent un troisième moteur de direction auxiliaire (10) et un quatrième moteur de direction auxiliaire (11), et le quatrième moteur de direction auxiliaire (11) est situé sur le côté extérieur du troisième moteur de direction auxiliaire (10) ;
le module de commande (1) est configuré pour commander les directions de déflexion à la fois de la première surface de commande correspondant au premier moteur de direction auxiliaire (8) et de la deuxième surface de commande correspondant au troisième moteur de direction auxiliaire (10) comme étant vers le haut, et pour commander les directions de déflexion à la fois de la première surface de commande correspondant au deuxième moteur de direction auxiliaire (9) et de la deuxième surface de commande correspondant au quatrième moteur de direction auxiliaire (11) comme étant vers le bas.

4. Véhicule aérien sans équipage selon la revendication 2, dans lequel, quand deux premiers moteurs de direction (6) sont prévus dans la voilure de gauche, et deux deuxièmes moteurs de direction (7) sont prévus dans la voilure de droite, le module de commande (1) est configuré pour commander les directions de déflexion correspondant aux deux premières surfaces de commande de la voilure de gauche comme étant opposées, et pour commander les directions de déflexion correspondant aux deux deuxièmes surfaces de commande de la voilure droite comme étant opposées ; ou, le module de commande (1) est utilisé pour commander les directions de déflexion des deux premiers moteurs de direction (6) et des deux deuxièmes moteurs de direction (7) comme étant accordées.

5. Véhicule aérien sans équipage selon la revendication 1, comprenant un premier moteur d'entraînement (12), un second moteur d'entraînement (13), une première hélice d'entraînement (14) et une seconde hélice d'entraînement (15),
dans lequel à la fois le premier moteur d'entraînement (12) et le second moteur d'entraînement (13) sont prévus dans le corps principal de fuselage (5), et sont prévus de manière fixe au niveau de l'extrémité avant et de l'extrémité arrière du corps principal de fuselage (5) respectivement ;
la première hélice d'entraînement (14) est connectée électriquement au premier moteur d'entraînement (12), et la première hélice d'entraînement (14) est prévue de manière fixe au niveau de l'extrémité avant du corps principal de fuselage (5) ;
la seconde hélice d'entraînement (15) est connectée électriquement au second moteur d'entraînement (13), et la seconde hélice d'entraînement (15) est prévue de manière fixe au niveau de l'extrémité arrière du corps principal de fuselage (5) ;
le premier moteur d'entraînement (12) et le second moteur d'entraînement (13) sont connectés électriquement au module de commande (1) respectivement ;
le module de commande (1) est configuré pour commander le premier moteur d'entraînement (12) pour qu'il soit initié à entraîner la première hélice d'entraînement (14) à se mettre en rotation de manière à entraîner le véhicule aérien sans équipage à voler vers l'avant ; et/ou,
le module de commande (1) est configuré pour commander le second moteur d'entraînement (13) pour qu'il soit initié à entraîner l'hélice d'entraînement (15) à se mettre en rotation de manière à pousser le véhicule aérien sans équipage à voler vers l'avant.

6. Véhicule aérien sans équipage selon la revendication 5, dans lequel le module de commande (1) est utilisé pour commander, quand le premier moteur d'entraînement (12) est défaillant, le second moteur d'entraînement (13) pour qu'il soit initié à entraîner la seconde hélice d'entraînement (15) à se mettre en rotation de manière à pousser le véhicule aérien sans équipage à voler vers l'avant ; ou,
le module de commande (1) est configuré pour commander, quand le second moteur d'entraînement (13) est défaillant, le premier moteur d'entraînement (12) pour qu'il soit initié à entraîner la première hélice d'entraînement (14) à se mettre en rotation de manière à entraîner le véhicule aérien sans équipage à voler vers l'avant.

7. Véhicule aérien sans équipage selon la revendication 1, dans lequel, quand un troisième moteur de direction (16) est prévu sur chaque queue verticale (17), le module de commande (1) est configuré pour commander, quand un troisième moteur de direction est défaillant, l'autre troisième moteur de direction pour ajuster la direction de déflexion de la troisième surface de commande correspondante.

8. Véhicule aérien sans équipage selon la revendication 1, comprenant en outre au moins deux tubes de vitesse d'air (18),
dans lequel les tubes de vitesse d'air (18) sont prévus respectivement sur le corps principal de fuselage (5) et/ou sur les bras à moteur (2) ;
les orientations des tubes de vitesse d'air (18) sont en accord avec la direction de vol du véhicule aérien sans équipage.

9. Véhicule aérien sans équipage selon la revendication 8, dans lequel, quand deux extrémités des bras à moteur (2) sont respectivement dotés de deux moteurs de sustentation (3), chaque moteur de sustentation (3) est connecté de manière fixe à une hélice de sustentation (4) ;
quand le véhicule aérien sans équipage comprend deux tubes de vitesse d'air (18), chaque tube de vitesse d'air (18) est prévu de manière fixe au niveau d'une position d'extrémité avant d'un bras à moteur (2).

10. Procédé de commande pour un véhicule aérien sans équipage selon la revendication 1, dans lequel le procédé de commande comprend les étapes consistant à :
fixer au préalable, via le module de commande (1), une correspondance entre deux extrémités de chaque bras à moteur (2) et les moteurs de sustentation correspondants (3) ;
commander, via le module de commande (1), chaque moteur de sustentation (3) pour qu'il soit initié à entraîner l'hélice de sustentation correspondante (4) à se mettre en rotation pour fonctionner ;
déterminer, via le module de commande (1), si un moteur de sustentation (3) est défaillant, si tel est le cas, acquérir une position concernant le bras à moteur (2) correspondant au moteur de sustentation défaillant, et ajuster la puissance d'autres moteurs de sustentation (3) dans la totalité des autres moteurs de sustentation correspondant à une position différente du moteur de sustentation défaillant, dans lequel
le procédé de commande comprend en outre l'étape consistant à :
commander, via le module de commande (1), les troisièmes moteurs de direction (16) pour ajuster les directions de déflexion des troisièmes surfaces de commande.

11. Procédé de commande pour le véhicule aérien sans équipage selon la revendication 10, dans lequel, quand le véhicule aérien comprend en outre au moins deux premiers moteurs de direction (6) et deuxièmes moteurs de direction (7), les premiers moteurs de direction (6) sont prévus de manière fixe dans une voiture de gauche du véhicule arrière, les deuxièmes moteurs de direction (7) sont prévus de manière fixe dans une voiture de droite du véhicule aérien, chaque premier moteur de direction (6) est connecté de manière fixe à une première surface de commande sur la voilure de gauche, et chaque deuxième moteur de direction (7) est connecté de manière fixe à une deuxième surface de commande sur la voilure droite, le procédé de commande comprenant en outre l'étape consistant à :
commander, via le module de commande (1), les premiers moteurs de direction (6) et les deuxièmes moteurs de direction (7) pour ajuster les directions de déflexion des premières surfaces de commande et des deuxièmes surfaces de commande.

12. Procédé de commande pour le véhicule aérien sans équipage selon la revendication 11, dans lequel, quand la voilure de gauche comprend deux premiers moteurs de direction (6), les premiers moteurs de direction comprennent (6) un premier moteur de direction auxiliaire (8) et un deuxième moteur de direction auxiliaire (9), et le deuxième moteur de direction auxiliaire (9) est situé sur l'autre côté du premier moteur de direction auxiliaire (8) ; quand la voilure de gauche comprend deux deuxièmes moteurs de direction (7), les deuxièmes moteurs de direction (7) comprennent un troisième moteur de direction auxiliaire (10) et un quatrième moteur de direction auxiliaire (11), et le quatrième moteur de direction auxiliaire (11) est situé sur le côté extérieur du troisième moteur de direction auxiliaire (10), le procédé de commande comprenant en outre les étapes consistant à :
commander, via le module de commande (1) les directions de déflexion à la fois de la première surface de commande correspondant au premier moteur de direction auxiliaire (8) et de la deuxième surface de commande correspondant au troisième moteur de direction auxiliaire (8) comme étant vers le haut, et commander, via le module de commande (1), les directions de déflexion à la fois de la première surface de commande correspondant au deuxième moteur de direction auxiliaire (9) et de la deuxième surface de commande correspondant aux quatrième moteur de direction auxiliaire (11) comme étant vers le bas.

13. Procédé de commande pour le véhicule aérien sans équipage selon la revendication 11, dans lequel, quand deux premiers moteurs de direction (6) sont prévus dans la voilure de gauche, et deux deuxièmes moteurs de direction (7) sont prévus dans la voilure de droite, le procédé de commande comprend en outre les étapes consistant à :
commander, via le module de commande (1), les directions de déflexion correspondantes des deux premières surfaces de commande de la voilure de gauche comme étant opposées, et commander, via le module de commande (1), les directions de déflexions correspondantes des deux deuxièmes surfaces de commande de la voilure droite comme étant opposées ; ou commander, via le module de commande (1), les directions de déflexion des deux premiers moteurs de direction (6) et des deux deuxièmes moteurs de direction (7) comme étant accordées.

14. Procédé de commande pour le véhicule aérien sans équipage selon la revendication 10, dans lequel, quand le véhicule aérien comprend en outre un premier moteur d'entraînement (12), un second moteur d'entraînement (13), une première hélice d'entraînement (14) et une seconde hélice d'entraînement (15), le procédé de commande comprend en outre les étapes consistant à :
commander, via le module de commande (1), le premier moteur d'entraînement (12) pour qu'il soit initié à entraîner la première hélice d'entraînement (14) à se mettre en rotation de manière à entraîner le véhicule aérien à voler vers l'avant ; et/ou,
commander, via le module de commande (1), le second moteur d'entraînement (13) pour qu'il soit initié à entraîner la seconde hélice d'entraînement (15) à se mettre en rotation de manière à pousser le véhicule aérien à voler vers l'avant.

15. Procédé de commande pour le véhicule aérien sans équipage selon la revendication 14, comprenant en outre les étapes consistant à :
quand le premier moteur d'entraînement (12) est défaillant, commander, via le module de commande (1), le second moteur d'entraînement (13) pour qu'il soit initié à entraîner la seconde hélice d'entraînement (15) à se mettre en rotation de manière à pousser le véhicule aérien à voler vers l'avant ; ou,
quand le second moteur d'entraînement (13) est défaillant, commander, via le module de commande (1), le premier moteur d'entraînement (12) pour qu'il soit initié à entraîner la première hélice d'entraînement (14) à se mettre en rotation de manière à entraîner le véhicule aérien à voler vers l'avant.

16. Procédé de commande le véhicule aérien selon la revendication 10, dans lequel, quand un troisième moteur de direction (16) est prévu sur chaque queue verticale (17), le procédé de commande comprend en outre l'étape consistant à :
quand un troisième moteur de direction est défaillant, commander, via le module de commande (1), l'autre troisième moteur de direction pour ajuster la direction de déflexion de la troisième surface de commande correspondante.
